Europäisches Patentamt

European Patent Office

Office européen des brevets

(19)

(11) Publication number: **0 246 902**
**A1**

(12) **EUROPEAN PATENT APPLICATION**

(21) Application number: **87304534.8**

(22) Date of filing: **21.05.87**

(51) Int. Cl.³: **A 23 L 1/315**
**A 23 L 1/318**

(30) Priority: **21.05.86 GB 8612344**
**13.01.87 GB 8700703**

(43) Date of publication of application:
**25.11.87 Bulletin 87/48**

(84) Designated Contracting States:
**AT BE CH DE ES FR GB IT LI NL SE**

(71) Applicant: **BUSH BOAKE ALLEN Limited**
**Blackhorse Lane Walthamstow**
**London E17 5QP(GB)**

(71) Applicant: **R.P. Scherer Limited**
**Frankland Road Blagrove**
**Swindon Wiltshire SN5 8YS(GB)**

(72) Inventor: **Brown, Keith Gordon**
**7 Widbury Gardens Ware**
**Herts SG12 7AT(GB)**

(72) Inventor: **Hough, Ken George**
**9 Newell Walk Cherryhinton**
**Cambridge(GB)**

(72) Inventor: **Rowe, Dennis**
**19 Branscombe Drive Wootton Bassett**
**Swindon Wiltshire SN4 8HR(GB)**

(74) Representative: **Lawrence, Peter Robin**
**Broughton et al,**
**GILL JENNINGS & EVERY 53-64 Chancery Lane**
**London WC2A 1HN(GB)**

(54) **Edible capsules and their use.**

(57) Meat that is enclosed in a tight skin (especially poultry) is basted during cooking by fat or oil that is released from a capsule that is inserted between the skin and the meat. The capsule may include flavouring. The preferred oil is fractionated coconut oil.

EP 0 246 902 A1

Croydon Printing Company Ltd.

Bush Boake Allen Limited                    60/2586/01

R.P.Scherer Limited

Edible Capsules and Their Use

When cooking poultry such as chicken or turkey there is a tendency for the meat to acquire a rather dry texture, especially if it has previously been frozen.

Succulence of meat can be increased by massaging pieces of meat with an aqueous phosphate solution but this tends to be impracticable when preparing a whole bird for roasting.

Normal domestic practice is to force poultry fat or cooking lard between the skin and the flesh of the bird before cooking, but this is messy and inconvenient.

Commercially it is known to inject the poultry with emulsified butter or a basting emulsion (e.g., of milk, phosphate and oil) using a multi-needle injection system. However this system is expensive and in practice it requires that all the birds passing through the system shall be treated similarly, thus reducing the opportunity for the cook to select the degree of basting that is to occur during cooking.

In addition to basting poultry meat during cooking it is often desirable to flavour the meat during roasting and at present this is done by stuffing the carcass with a flavoured stuffing.

It is of course well known to supply a cook with flavours in capsule form.  The capsules can be micro-capsules (e.g., 60μm or below) or can be larger gelatin capsules, e.g., 0.5g or more.  The use of savoury-flavoured gelatin capsules is very effective for flavouring liquids that can be stirred during cooking, e.g., sauces or stews, since the stirring ensures dissipation of the flavour throughout the liquid. However the insertion of such a capsule in, for instance, a piece of meat does not give satisfactory results as the flavour cannot become dissipated uniformly throughout the meat and instead remains in a highly concentrated form in part only of the meat.

In a method according to the invention meat is cooked while enclosed in a tight skin and an edible capsule comprising a shell and a filling is inserted between the skin and the meat before or during cooking, and the capsule is such that the shell substantially completely dissolves or melts during the cooking and the filling comprises an edible oil or fat that bastes the meat during the cooking.

The skin must be sufficiently tightly fitted around the meat that the oil or molten fat is trapped between the skin and the meat and the heat of cooking causes it to migrate over the surface of the meat during cooking, so as to produce a relatively uniform basting effect. The tight skin can be a tightly fitting synthetic skin applied to the meat but preferably the meat is poultry, most preferably chicken or turkey, and the tight skin is the natural skin of the poultry. Preferably the poultry is whole, i.e., the whole carcass as opposed to joints of poultry. Generally the capsule is inserted between the skin and the breast.

The cooking is normally dry cooking conducted at a high temperature, e.g., above 120°C, since wet cooking (e.g., in a casserole or by frying) does not generally necessitate basting of the meat. The dry cooking can be in a microwave if the conditions are such that the fat or oil will provide basting during the cooking, but preferably the dry cooking is by hot roasting at temperatures conventional for the roasting of poultry.

Although the capsules can be very small, so that several will be needed for each chicken, it is preferred for the capsules to be relatively large so that very few will be required for each piece of poultry. Preferably each capsule contains at least 0.2g filling, most preferably 0.5 to 10g filling, typically around 1 or 2g. The capsules preferably are elongated with a length of 7 to 30 (e.g., about 15) mm and a diameter of 4-15 (e.g., about 9) mm. With such capsules an adequate effect can usually be obtained with chickens by using two capsules, one for each side of the breast. Larger numbers may be required for larger poultry, e.g., mature turkeys.

The capsule must melt or dissolve during the cooking, generally at a temperature below 250°C, sufficient to release its filling of oil or fat, which will be molten at the cooking temperature.

When the filling is of fat, the fat must be fully molten and of low viscosity at the cooking temperature and conveniently is butter. Preferably however the filling is based primarily on edible oil. This can contain animal oil, such as anhydrous buffer oil (the lipid system obtained from butter) but is preferably vegetable oil. The oil must be stable on storage, should have a relatively low viscosity (e.g., below 50 cP at 20°C) and preferably has a low solidification point, preferably below 0°C. Suitable vegetable oils include sunflower, maize, corn, palm and coconut oil. Fractionated vegetable oils are particularly preferred and best results are obtained using fractionated coconut oil, e.g., as defined in British Pharmacopoeia 1980 or British Pharmaceutical Codex 1973. Other oils that can be used include the materials defined in German Pharmacopoeia (Deutsches Arzneibuch), 8th edition as "Medium Chain Triglycerides", Deutscher Arzneimittel Codex 1973 as Oleum Neutrale and DAK-Praparater (Denmark) 1963 as Oleum Vegetabile Tenue. Particularly preferred oils are the fractionated coconut oils that are commercially available under the trade names Alembicol, Miglyol 812 Neutral and Viscoleo Extra.

The fat or oil used in the invention is preferably substantially flavourless and so its use can result solely in basting the meat, without altering its flavour. However it is often preferred to include flavouring in the filling and thus the cook may be provided with a range of capsules, each having a distinctive flavour, and may thus be able to make a personal choice as to the flavour and degree of basting that should be achieved.

The filling of the capsule is preferably liquid, to facilitate manufacture of the capsules, at room temperature and so the filling preferably comprises an edible oil with one or more flavours. The edible oil generally accounts for at least 90% and usually at least 95% of the total filling. Any flavouring that is desirable in poultry or other meat that may be basted according to the invention can be incorporated, for instance butter, barbeque, smoke, Tandoori, sage or other herb, or onion, or any appropriate mixture thereof. Suitable synthetic flavours for basting poultry include caproic acid, caprylic acid, capric acid, diacetyl (in very low amounts), oleic acid and sage oil.

Many capsule shells of, for instance, gelatin do melt sufficient to release their contents but are not always wholly meltable, since there is sufficient cross linked shell material in the shell to result in a residual, non-meltable, skin. Although such capsules can be used in the invention it is preferred for the shell to be wholly meltable so that, upon melting, it does not leave any non-molten residue.

We have found that capsule shells which initially are wholly meltable may become partially non-meltable after filling and during storage and that this is probably due to chemical reaction between the filling and the gelatin or other shell material so as to cause cross linking and insolubility. We believe that the presence of aldehyde or, in some instance, ketone groups in the filling of the capsule is liable to cause cross linking and so the amount of aldehyde or ketone groups in the filling is preferably sufficiently low that the shell does not cross link during storage sufficeint to form a non-meltable residue. If the filling is one that would naturally contain a high aldehyde or ketone content (e.g., if it includes butter) it is desirable to take steps to prevent the cross linking that may occur. Thus the filling may be specially modified, e.g., by reducing the amount of aldehyde and/or ketone groups to a sufficiently low level that significant cross linking does not occur, or the gelatin may be modified chemically, e.g., by reaction with succinate in known manner, to reduce its tendency to cross link.

Suitable formulations for use as the filling in gelatin capsules include the following recipes.

|  | 1 | 2 | 3 |
|---|---|---|---|
| Caproic Acid |  | 0.5g |  |
| Caprylic Acid | 1.0g | 4.0g | 1.0g |
| Capric Acid | 1.5g | 2.6g | 2.0g |
| Diacetyl | 0.2g | 0.5g | 0.2g |
| Olric Acid | 8.0g | 12.0g | 8.0g |
| Sage Oil |  |  | 6.0g |
| Fractionated Coconut Oil | 789.3g | 980.4g | 982.8g |
| Buffer Oil Anhydrous | 200.0g |  |  |
|  | 1000.0g | 1000.0g | 1000.0g |

Conventional gelatin capsules, having a capacity of 1g, and dimensions of about 14mm x 9mm are each filled with 1g of one of the above compositions and sealed, in conventional manner.

The use of diacetyl in an amount of up to 0.5g does not cause undesirable cross linking, but higher amounts might.

When roasting chicken or turkey one or more capsules are forced between the skin and the chicken breast, on each side, before cooking. During cooking the capsule melts and the flavoured oil rises between the skin and the breast and bastes and flavours substantially the entire breast.

0246902

CLAIMS

1. A method in which meat is cooked while enclosed in a tight skin and an edible capsule comprising a shell and a filling is inserted between the skin and the meat before or during cooking and in which the capsule is such that the shell substantially completely dissolves or melts during the cooking and the filling comprises an edible oil or fat that bastes the meat during the cooking.

2. The use during the cooking of meat of an edible capsule comprising a shell that substantially completely dissolves or melts during the cooking and a filling that comprises edible oil or fat, and in which the meat is cooked while enclosed in a tight skin and the capsule is inserted between the skin and the meat before or during the cooking and the oil or fat bastes the meat during the cooking.

3. A method or use according to claim 1 or claim 2 in which the meat is whole poultry and the capsule is inserted between the natural skin and the breast of the poultry.

4. A method or use according to any preceding claim in which the cooking is dry cooking at above 120°C.

5. A method or use according to any preceding claim in which the capsule contains 0.5 to 10g oil or fat.

6. A method or use according to any preceding claim in which the capsule has a length of 7 to 30mm and a diameter of 4 to 15mm.

7. A method or use according to any preceding claim in which the filling comprises fractionated coconut oil.

8. A method or use according to any preceding claim in which the filling also comprises a flavouring.

9. A method or use according to any preceding claim in which the shell is of gelatin.

10. A method or use according to any preceding claim in which the shell melts completely during the cooking and does not leave any non-molten residue.

European Patent
Office

**EUROPEAN SEARCH REPORT**

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl.4) |
| A | GB-A-1 251 473 (STEGLES PTY LTD.)<br>* page 1, lines 38-42, page 3, example 4, claim 1 * | 1 | A 23 L 1/315<br>A 23 L 1/318 |
| | --- | | |
| A | GB-A-2 131 270 (BUXTEP POULTRY LTD.)<br>* abstract, claims 1, 4, 7 * | 1 | |
| | --- | | |
| A | DE-A-1 913 078 (SWIFT & CO.)<br>* claims 1, 5, 6 * | 1,7 | |
| | ----- | | |

|  |
|---|
| TECHNICAL FIELDS SEARCHED (Int. Cl 4) |
| A 23 L 1/00 |

The present search report has been drawn up for all claims

| Place of search | Date of completion of the search | Examiner |
|---|---|---|
| BERLIN | 29-07-1987 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO Form 1503 03 82